# EUROPÄISCHE PATENTSCHRIFT

(11) **EP 1 270 290 B1**
(45) Veröffentlichungstag und Bekanntmachung des Hinweises auf die Patenterteilung: **22.09.2004**
(21) Anmeldenummer: 02011403.9
(22) Anmeldetag: 24.05.2002
(51) Int. Cl.: B60H 1/22

(54) **Heizsystem und Verfahren zum Beeinflussen von Luftströmungen in einem Heizsytem**
Heating system and method for influencing air flows in a heating system
Système de chauffage et procédé pour influencer les courants d'air dans un système de chauffage

(30) Priorität: 18.06.2001 DE 10129203
(43) Veröffentlichungstag der Anmeldung: 02.01.2003
(73) Patentinhaber: Webasto AG, 82131 Stockdorf (DE)
(72) Erfinder: Ludwig, Andreas, 82377 Penzberg (DE); May, Andreas, 81245 München (DE); Elm, Nils, 82152 Planegg (DE)
(74) Vertreter: Schumacher & Willsau

(56) Entgegenhaltungen:
- US-A- 5 299 631
- PATENT ABSTRACTS OF JAPAN vol. 012, no. 392 (M-755), 19. Oktober 1988 (1988-10-19) & JP 63 141818 A (NIPPON DENSO CO LTD), 14. Juni 1988 (1988-06-14)
- PATENT ABSTRACTS OF JAPAN vol. 010, no. 134 (M-479), 17. Mai 1986 (1986-05-17) & JP 60 259521 A (NIPPON DENSO KK), 21. Dezember 1985 (1985-12-21)
- PATENT ABSTRACTS OF JAPAN vol. 011, no. 123 (M-581), 17. April 1987 (1987-04-17) & JP 61 263823 A (NIPPON DENSO CO LTD), 21. November 1986 (1986-11-21)

## Beschreibung

Die Erfindung betrifft ein Heizsystem zum Erwärmen von Luft, insbesondere zum Beheizen des Innenraums eines Kraftfahrzeugs wie offenbart in JP-63141818, mit mindestens einer ersten Heizung, mindestens einer zweiten Heizung, mindestens einem Steuergerät und mindestens einem Strömungsweg zwischen der ersten Heizung und der zweiten Heizung. Die Erfindung betrifft weiterhin ein Verfahren zum Beeinflussen von Luftströmungen in einem Heizsystem zum Erwärmen von Luft, insbesondere zum Beheizen des Innenraums eines Kraftfahrzeugs, mit mindestens einer ersten Heizung, mindestens einer zweiten Heizung, mindestens einem Steuergerät und mindestens einem Strömungsweg zwischen der ersten Heizung und der zweiten Heizung.

Ein anderes gattungsgemäßes Heizsystem ist aus der DE-A-15 30 687 bekannt.

Insbesondere im Kraftfahrzeugbereich ist es bekannt, gattungsgemäße Heizsysteme und gattungsgemäße Verfahren einzusetzen. Diese zeichnen sich durch das Zusammenwirken einer ersten Heizung - der Fahrzeugheizung beziehungsweise einer Kombination aus Fahrzeugheizung und Klimaanlage - und einer zweiten Heizung - der Luftzusatzheizung - aus. Die Fahrzeugheizung beziehungsweise die Kombination aus Fahrzeugheizung und Klimaanlage wird auch als "Frontbox" bezeichnet. Die Kombination aus Fahrzeugheizung und Klimaanlage ist auch als HVAC ("Heat Ventilation Air Condition") bekannt. Wenn im Folgenden bei der Beschreibung des Standes der Technik und bei der Beschreibung der Erfindung von einer Fahrzeugheizung die Rede ist, so sind stets auch Kombinationen einer Fahrzeugheizung mit einer Klimaanlage gemeint.

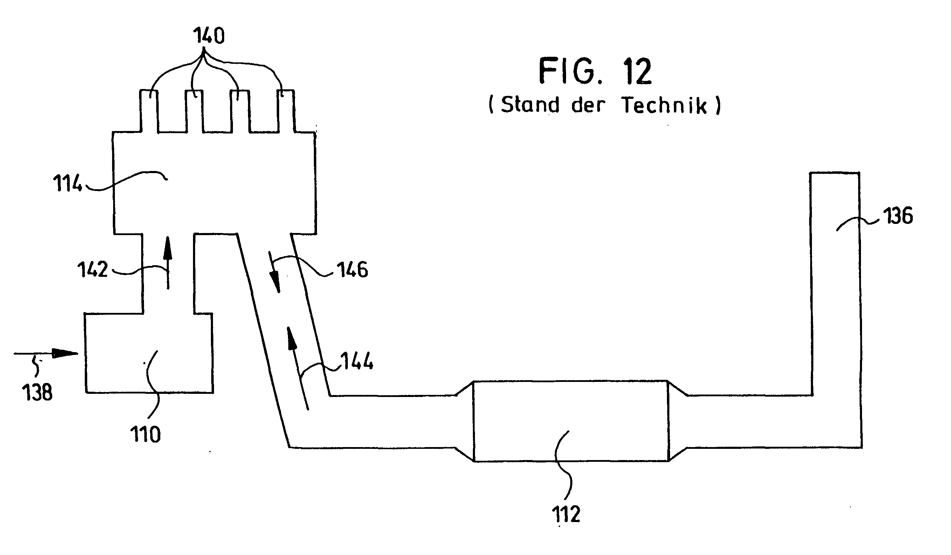

Figur 12 zeigt schematisch den Aufbau eines Systems des Standes der Technik. Eine Fahrzeugheizung 110 mit einem Lufteintritt 138, der nicht näher dargestellt ist, steht mit einer Mischkammer 114 in Verbindung. Weiterhin ist eine Zusatzheizung 112 vorgesehen, die einen Lufteintritt 136 aufweist. Auch die Zusatzheizung 112 steht mit der Mischkammer 114 in Verbindung. Die Mischkammer 114 weist mehrere Luftkanäle 140 für den Austritt von Luft auf. Im Allgemeinen besteht in der Mischkammer 114 die Möglichkeit, den dort eintretenden Volumenstrom über Klappen in die unterschiedlichen Luftkanäle 140 umzuleiten oder Luftkanäle 140 abzuschließen. Auf diese Weise wird dem Benutzer die Möglichkeit gegeben, umfangreiche Einstellungen zur Klimatisierung des Innenraums eines Kraftfahrzeugs vorzunehmen.

Beim normalen Betrieb des Heizsystems gemäß Figur 12 tritt ein Luftstrom 142 aus der Fahrzeugheizung 110 aus und in die Mischkammer 114 ein. Ebenso tritt ein Luftstrom 144 aus der Zusatzheizung 112 aus und in die Mischkammer 114 ein. Aufgrund dieser an sich voneinander unabhängigen Luftströmungen 142, 144 kann eine Gegenkopplung resultieren, die beispielsweise zu dem Gegendruck 146 gegen die Strömung 144 der Zusatzheizung 112 führen kann. In Figur 12 hat der Gegendruck 146 einen geringen Betrag, so dass ein ordnungsgemäßes Arbeiten des Heizsystems möglich ist.

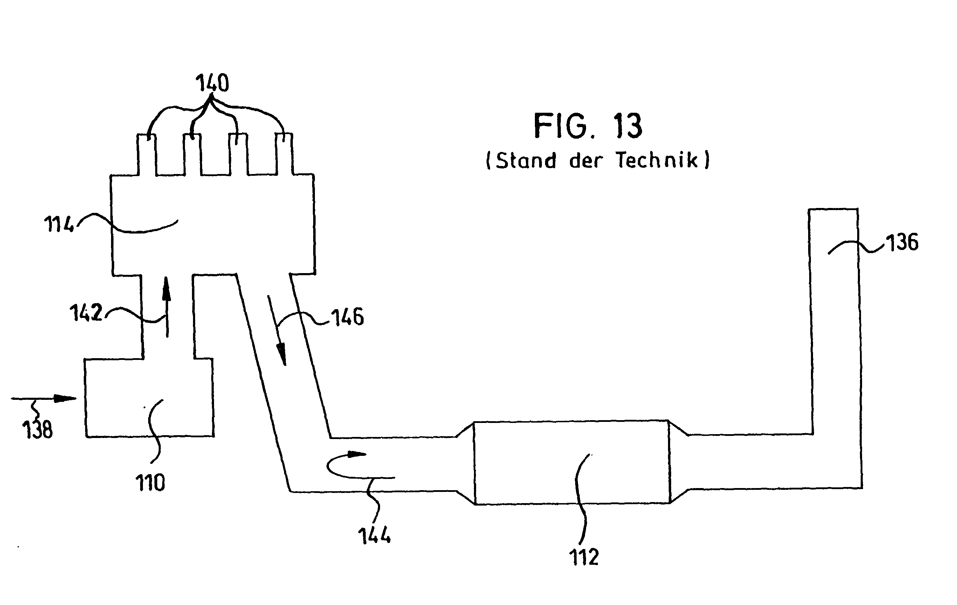

In Figur 13 ist ein System dargestellt, welches vom Aufbau her demjenigen aus Figur 12 entspricht. Im Unterschied zu dem in Figur 12 schematisch dargestellten Betriebszustand arbeitet das Heizsystem gemäß Figur 13 nicht ordnungsgemäß. Dies resultiert aus dem erhöhten Gegendruck 146, der im dargestellten Fall so groß ist, dass er eine Umkehr der Luftströmung 144 bewirkt.

Das Entstehen der in Figur 12 beziehungsweise in Figur 13 schematisch dargestellten Betriebszustände und die daraus resultierende Problematik wird nachfolgend erläutert.

Die Fahrzeugheizung besitzt ein Gebläse, das mit hohem Volumenstrom und relativ geringer Drucksteifigkeit Luft in die Mischkammer einbläst. Unter dem Begriff Drucksteifigkeit ist das Potential eines Druckaufbaus zu verstehen. Eine hohe Drucksteifigkeit steht beispielsweise für das Potential, einen hohen Druck aufzubringen. Das Gebläse der Fahrzeugheizung kann stufenlos oder in Stufen geregelt werden, wobei diese Regelung insbesondere unabhängig von den thermodynamischen Zuständen in dem Heizsystem vorgenommen werden kann.

Auch die Zusatzheizung besitzt ein Gebläse. Dieses ist im Gegensatz zu dem Gebläse der Fahrzeugheizung relativ drucksteif, wobei jedoch ein geringerer Volumenstrom erzeugt wird. Bei gängigen Zusatzheizungen kann das Gebläse der Zusatzheizung prinzipbedingt nicht unabhängig von der Heizleistung der Zusatzheizung geregelt werden. Wenn mehr Heizleistung benötigt wird, so steigt auch der Volumenstrom an und umgekehrt. Aufgrund der Änderung des Volumenstroms der Zusatzheizung ändert sich aber auch die Drucksteifigkeit. Die Ausblastemperatur an der Zusatzheizung ist unter anderem abhängig von den der Zusatzheizung entgegenwirkenden Widerständen. Dies kann bei hohem Widerstand zu einer erhöhten Ausblastemperatur führen, die durch Herunterregeln oder Abschalten der Zusatzheizung begrenzt wird.

Für den Betrieb der Zusatzheizung ist es daher ideal, wenn sie bei niedrigen Aussentemperaturen mit hohen Heizleistungen, das heißt hohen Volumenströmen und somit hoher Drucksteifigkeit laufen kann. Die Zusatzheizung kann dann dem Gebläse der Fahrzeugheizung entgegenwirken, insbesondere wenn letzteres mit niedrigen Gebläsestufen betrieben wird beziehungsweise wenn nur wenige Klappen in der Mischkammer geschlossen sind.

Problematisch ist allerdings, wenn die Zusatzheizung aufgrund steigender Temperaturen die Heizleistung absenken muss. Aufgrund der vorstehend erläuterten Gesetzmäßigkeiten sinkt dann auch die Drucksteifigkeit und mithin die Möglichkeit, dem Fahrzeuggebläse ausreichend entgegenzuwirken. Ein solcher Zustand hat wiederum zur Folge, dass der Widerstand für die Zusatzheizung immer höher wird und die Zusatzheizung immer weiter die Heizleistung herunterregelt. Dies kann dazu führen, dass der Gegendruck, der durch das Fahrzeugheizungsgebläse erzeugt wird, höher ist als der Druck der Zusatzheizung. Dieser Zustand wird auch als Überdrückung bezeichnet. Die Wärme der Zusatzheizung kann dann nicht mehr abgefördert werden. Im Extremfall wird sie in die umgekehrte Richtung transportiert. Dies kann dazu führen, dass ein im Allgemeinen im Auslassbereich der Zusatzheizung angeordneter Überhitzungsschutz außer Kraft gesetzt werden kann. Weiterhin kann es zu gravierenden Schäden am gesamten System kommen, beispielsweise im Einlassbereich beziehungsweise am Steuergerät der Zusatzheizung.

Der Erfindung liegt daher die Aufgabe zugrunde, ein Heizsystem und ein Verfahren zur Verfügung zu stellen, welche die genannten Nachteile ausräumen und welche insbesondere eine Überdrückung in dem Heizsystem vermeiden.

Diese Aufgabe wird mit den Merkmalen der unabhängigen Ansprüche gelöst. Vorteilhafte Ausführungsformen der Erfindung sind in den abhängigen Ansprüchen angegeben.

Die Erfindung baut auf dem gattungsgemäßen Heizsystem dadurch auf, dass eine Rückschlagklappe vorgesehen ist, die eine Strömung von der ersten Heizung zu der zweiten Heizung behindert, dass Mittel zum Erkennen der Behinderung der Strömung von der ersten Heizung zu der zweiten Heizung vorgesehen sind und dass ein Betriebszustand der zweiten Heizung in Abhängigkeit von Ausgangssignalen der Mittel zum Erkennen der Behinderung durch das Steuergerät steuerbar beziehungsweise regelbar ist. Auf diese Weise ist es möglich, eine Überdrückung des Heizsystems zu vermeiden. Im normalen Betrieb ist es möglich, dass sich eine Luftströmung von der zweiten Heizung durch die Rückschlagklappe zur ersten Heizung ausbildet. Kommt es jedoch zu einem erhöhten Gegendruck, so bewirkt die Rückschlagklappe vorzugsweise eine vollständige Verdämmung. Dieser Zustand wird erkannt und die zweite Heizung kann im Hinblick auf ihren Betriebszustand durch das Steuergerät gesteuert oder geregelt werden. Bei funktionstüchtiger Rückschlagklappe kann es somit nicht mehr zu einer Strömungsumkehr in der zweiten Heizung kommen. Denn bei einem Gegendruck, der an sich zu einer Strömungsumkehr führen würde, blockiert die Rückschlagklappe die Strömung.

Die Erfindung entfaltet ihre Vorteile besonders dadurch, dass die erste Heizung eine Fahrzeugheizung ist und dass die zweiten Heizung eine Zusatzheizung ist. Die Erfindung ist in vorteilhafter Weise für das Zusammenspiel von Heizungen in beliebigen Umgebungen einsetzbar. Besondere Vorzüge ergeben sich aber beim Einsatz in einem Kraftfahrzeug. Dort werden Zusatzheizungen häufig mit Fahrzeugheizungen beziehungsweise mit Fahrzeugheizungssystemen kombiniert, die sich bereits in der Anwendung befinden. Die Erfindung ermöglicht durch die Entkopplung der einzubindenden Zusatzheizung von der Fahrzeugheizung eine problemlose Integration.

Vorzugsweise ist mindestens eine Mischkammer vorgesehen, in die aus der mindestens einen ersten Heizung und aus der mindestens einen zweiten Heizung ausgeströmte Luft eintreten kann. Eine solche Mischkammer ist nützlich, um Luft mit einer einheitlichen Temperatur in den Innenraum des Kraftfahrzeugs einzuleiten. Die Verbindung der Fahrzeugheizung mit der Zusatzheizung besteht dann im Allgemeinen über diese Mischkammer, wobei es auch dann zu der Problematik der Überdrückung kommen kann. Insbesondere weist eine Mischkammer häufig Klappen auf, mit denen Kanäle ganz oder teilweise verschlossen werden können, so dass der Gegendruck gegen die Strömung aus der Zusatzheizung sehr hoch werden kann.

Es ist von besonderem Vorteil, dass zum Erfassen von Druckzuständen in dem Heizsystem mindestens ein Drucksensor zum Erzeugen eines Eingangssignals für ein Steuergerät vorgesehen ist. Ein solcher Drucksensor kann beispielsweise als Differenzdrucksensor ausgelegt sein, wobei die Differenz zwischen dem Druck vor dem Zusatzheizgerät und dem Druck im beziehungsweise nach dem Zusatzheizgerät gemessen wird. Bei zu hoher Differenz liegt mit hoher Wahrscheinlichkeit eine Überdrückung vor, so dass ebenfalls wahrscheinlich ist, dass die Rückschlagklappe nicht ordnungsgemäß arbeitet. Der Drucksensor bietet somit eine Sicherheitsfunktion.

Weiterhin ist zu bevorzugen, dass zum Erfassen von Temperaturzuständen in dem Heizsystem mindestens ein Temperatursensor zum Erzeugen eines Eingangssignals für ein Steuergerät vorgesehen ist. Derartige Temperatursensoren können die unterschiedlichsten Aufgaben erfüllen, und sie dienen insbesondere dem Liefern von Eingangsdaten für ein Steuergerät. Dieses kann mitunter zahlreiche Informationen verarbeiten, um letztlich die Betriebszustände der Zusatzheizung in vorteilhafter Weise zu steuern beziehungsweise zu regeln.

In diesem Zusammenhang ist es von besonderem Vorteil, dass die Mittel zum Erkennen der Behinderung als erster Temperatursensor realisiert sind und dass ein zweiter Temperatursensor zum Erkennen einer Strömungsumkehr in der zweiten Heizung vorgesehen ist. Der erste Temperatursensor reagiert somit auf die Verdämmung der Zusatzheizung, da dies einen sprunghaften Temperaturanstieg, beispielsweise im Bereich des Ausgangs der Zusatzheizung, mit sich bringt. Damit liegen im Prinzip ausreichende Informationen vor, um dem Steuergerät die Möglichkeit zu geben, geeignete Maßnahmen zu ergreifen. Es ist jedoch sinnvoll, einen zweiten Temperatursensor einzubinden, der eine Redundanzinformation liefert. Würde nämlich die Rückschlagklappe nicht ordnungsgemäß arbeiten, so käme es mitunter bei dem Temperatursensor am Ausgangsbereich der Luftzusatzheizung nicht zu einem Temperaturanstieg. Dort kann es sogar zu einem Temperaturabfall kommen. Ordnet man jedoch einen zweiten Temperatursensor an geeigneter Stelle an, so lässt sich eine Überdrückung des Heizsystems zuverlässig erkennen. Auf der Grundlage dieser Information können dann auch entsprechende Maßnahmen durch das Steuergerät ergriffen werden.

Vorzugsweise ist an der Ausblasseite der zweiten Heizung eine Auskühlöffnung vorgesehen. Eine solche Auskühlöffnung dient im Zustand der Verdämmung der Zusatzheizung dazu, eine Abkühlung der Zusatzheizung zu beschleunigen.

Das erfindungsgemäße Heizsystem ist besonders vorteilhaft dadurch ausgebildet, dass die Rückschlagklappe einen gitterförmigen Träger aufweist und dass die Rückschlagklappe eine elastische Abdeckung aufweist, die den gitterförmigen Träger zumindest teilweise überdecken kann. Je nach Auslegung der Rückschlagklappe ermöglicht diese somit eine totale beziehungsweise eine teilweise Verdämmung.

Ebenfalls kann es nützlich sein, dass ein.Zusatzgebläse vorgesehen ist, mit dem eine Strömung von der zweiten Heizung zu der ersten Heizung erzeugbar ist. Ein solches Zusatzgebläse kann einerseits dazu dienen, die Drucksteifigkeit der Strömung von der zweiten Heizung zu der ersten Heizung zu erhöhen. Andererseits kann sie beim Abkühlen der Zusatzheizung unterstützend wirken.

Die Erfindung baut auf dem gattungsgemäßen Verfahren dadurch auf, dass eine Strömung von der ersten Heizung zu der zweiten Heizung durch eine Rückschlagklappe behindert wird, dass die Behinderung der Strömung von der ersten Heizung zu der zweiten Heizung erkannt wird und dass ein Betriebszustand der zweiten Heizung in Abhängigkeit des Erkennens der Behinderung durch das Steuergerät gesteuert beziehungsweise geregelt wird. Auf diese Weise werden die im Zusammenhang mit dem Heizsystem erläuterten Eigenschaften und Vorzüge der Erfindung auch im Rahmen eines Verfahrens realisiert. Dies gilt ebenso für die nachfolgend genannten Ausführungsformen des Verfahrens.

Die Erfindung entfaltet ihre Vorteile besonders dadurch, dass die erste Heizung eine Fahrzeugheizung ist und dass die zweite Heizung eine Zusatzheizung ist.

Vorzugsweise ist mindestens eine Mischkammer vorgesehen, in die aus der mindestens einen ersten Heizung und aus der mindestens einen zweiten Heizung ausgeströmte Luft eintreten kann.

Es ist von besonderem Vorteil, dass Druckzustände in dem Heizsystem von mindestens einem Drucksensor erfasst werden und dass ein druckabhängiges Eingangssignal für ein Steuergerät erzeugt wird.

Im gleichen Sinne ist es zu bevorzugen, dass Temperaturzustände in dem Heizsystem von mindestens einem Temperatursensor erfasst werden und dass ein temperaturabhängiges Eingangssignal für ein Steuergerät erzeugt wird.

Das erfindungsgemäße Verfahren ist in vorteilhafter Weise dadurch weitergebildet, dass die Behinderung der Strömung von der ersten Heizung zu der zweiten Heizung von einem ersten Temperatursensor erfasst wird und dass eine Strömungsumkehr in der zweiten Heizung von einem zweiten Temperatursensor erfasst wird.

Es ist weiterhin zu bevorzugen, dass nach dem Erkennen einer Behinderung von der ersten Heizung zu der zweiten Heizung die Heizwirkung der zweiten Heizung abgeschaltet wird. Da in vielen Fällen der Zustand einer Überdrückung beziehungsweise der daraus resultierende Zustand einer Verdämmung mit einer Überhitzung des Zusatzheizgerätes einhergeht, ist es sinnvoll, den Brenner des Zusatzheizgerätes abzuschalten.

Aus demselben Grund ist es sinnvoll, dass nach dem Erkennen einer Strömungsumkehr in der zweiten Heizung die Heizwirkung der zweiten Heizung abgeschaltet wird.

Weiterhin ist es sinnvoll, dass nach dem Abschalten der Heizwirkung ein Gebläse mit erhöhter Drehzahl Luft durch die zweite Heizung fördert. Bei diesem Gebläse kann es sich um das Gebläse der Zusatzheizung selbst handeln. Durch die erhöhte Drehzahl wird das Abkühlen des Heizgerätes beschleunigt, und es kann zu einem früheren Zeitpunkt wieder in Betrieb genommen werden.

Es kann aber auch sinnvoll sein, dass nach dem Abschalten der Heizwirkung ein Gebläse mit vorbestimmter Drehzahl Luft durch die zweite Heizung fördert, wobei die vorbestimmte Drehzahl durch das Steuergerät bestimmt wird. Dies kann beispielsweise sinnvoll sein, wenn die Zündung des Kraftfahrzeugs beziehungsweise die Kraftfahrzeugheizung ausgeschaltet sind. In diesem Fall kann eine verringerte Geräuschbildung aufgrund einer geringeren Drehzahl erstrebenswerter sein als eine möglichst rasche Abkühlung.

Der Erfindung liegt die Erkenntnis zugrunde, dass eine Überdrückung und die damit verbundenen Probleme im Bereich einer Luftzusatzheizung durch das Bereitstellen einer Rückschlagklappe und entsprechend veränderte Programmabläufe des Steuergerätes überwunden werden können. Eine zusätzliche Sicherheit kann eingebaut werden, indem ein Redundanzsensor verwendet wird. Dieser veranlasst das Steuergerät, bestimmte Maßnahmen zu ergreifen, auch wenn beispielsweise aufgrund einer defekten Rückschlagklappe eine Verdämmung nicht erkannt wird.

Die Erfindung wird nun mit Bezug auf die begleitenden Zeichnungen anhand bevorzugter Ausführungsformen beispielhaft erläutert. Dabei zeigt:
- Figur 1: eine schematische Darstellung eines Heizsystems mit einer ersten Ausführungsform einer Umschaltklappe;
- Figur 2: eine schematische Darstellung eines Teils eines Heizsystems mit einer zweiten Ausführungsform einer Umschaltklappe;
- Figur 3: eine perspektivische Darstellung der zweiten Ausführungsform einer Umschaltklappe;
- Figur 4: eine schematische Darstellung eines Teils eines Heizsystems mit einer zweiten Ausführungsform einer Umschaltklappe während eines ersten Strömungszustandes;
- Figur 5: eine schematische Darstellung eines Teils eines Heizsystems mit einer zweiten Ausführungsform einer Umschaltklappe während eines zweiten Strömungszustandes;
- Figur 6: eine schematische Darstellung eines Heizsystems mit einem Zusatzgebläse;
- Figur 7: ein Diagramm, bei dem Druckdifferenzen von Drücken vor und hinter einer Luftzusatzheizung beziehungsweise einer Fahrzeugheizung gegen den Volumenstrom aufgetragen sind;
- Figur 8: eine schematische Darstellung eines Heizsystems mit einer Rückschlagklappe;
- Figur 9: drei perspektivische Darstellungen einer Rückschlagklappe in verschiedenen Perspektiven beziehungsweise Montagezuständen;
- Figur 10: eine schematische Darstellung einer Luftzusatzheizung mit einem Druckdifferenzsensor;
- Figur 11: eine schematische Darstellung einer Luftzusatzheizung mit Temperatursensoren;
- Figur 12: eine schematische Darstellung eines Heizsystems des Standes der Technik mit einem unkritischen Strömungszustand; und
- Figur 13: eine schematische Darstellung eines Heizsystems des Standes der Technik mit einem kritischen Strömungszustand.

Bei der nachfolgenden Beschreibung der Zeichnungsfiguren bezeichnen gleiche Bezugszeichen gleiche oder vergleichbare Elemente.

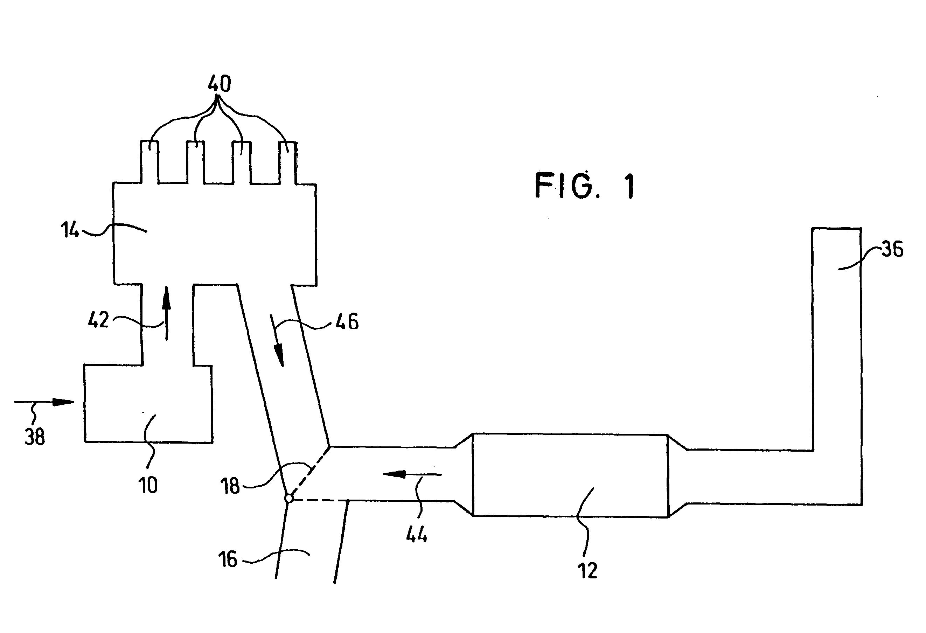

Figur 1 zeigt eine schematische Darstellung eines Heizsystems mit einer ersten Ausführungsform einer Umschaltklappe 18. Eine Fahrzeugheizung 10 mit einem Lufteintritt 38, der nicht näher dargestellt ist, steht mit einer Mischkammer 14 in Verbindung. Weiterhin ist eine Zusatzheizung 12 vorgesehen, die einen Lufteintritt 36 aufweist. Auch die Zusatzheizung 12 kann mit der Mischkammer 14 verbunden sein. Die Mischkammer 14 weist mehrere Luftkanäle 40 für den Austritt von Luft auf. Im Allgemeinen besteht in der Mischkammer 14 die Möglichkeit, den dort eintretenden Volumenstrom über Klappen in die unterschiedlichen Luftkanäle 40 umzuleiten oder Luftkanäle 40 abzuschließen. Auf diese Weise wird dem Benutzer die Möglichkeit gegeben, umfangreiche Einstellungen zur Klimatisierung des Innenraums des Kraftfahrzeugs vorzunehmen.

Weiterhin ist in dem Verbindungsbereich zwischen Zusatzheizung 12 und Mischkammer 14, der auch der Verbindungsbereich zwischen Zusatzheizung 12 und Fahrzeugheizung 10 ist, eine Abluftöffnung 16 vorgesehen. Im Bereich dieser Abluftöffnung 16 ist eine Umschaltklappe 18 gelenkig angeordnet.

Die Umschaltklappe 18 ist in zwei Zuständen gezeigt und daher mit unterbrochenen Linien dargestellt. Im ersten Schaltzustand verschließt die Umschaltklappe 18 die Abluftöffnung 16, und es besteht eine Verbindung zwischen der Zusatzheizung 12 und der Mischkammer 14 beziehungsweise der Fahrzeugheizung 10. In einem zweiten Schaltzustand verschließt die Umschaltklappe 18 diese Verbindung zwischen Zusatzheizung 12 und Mischkammer 14; die Abluftöffnung 16 wird hingegen freigegeben. Das Heizsystem mit dem ersten Zustand der Umschaltklappe 16 entspricht also strömungstechnisch vom Prinzip her dem Heizsystem des Standes der Technik, das anhand der Figuren 12 und 13 erläutert wurde. Dieser erste Zustand der Umschaltklappe kann also dann eingenommen werden, wenn ein zulässiger Strömungszustand vorliegt, wie er anhand von Figur 12 erläutert wurde, insbesondere also dann, wenn keine Überdrückung durch einen Gegendruck 46 vorliegt, der letztlich aus der ausströmenden Luft 42 aus der Fahrzeugheizung 10 resultiert. In dem Fall hat die Strömung 44 aus der Zusatzheizung 12 eine ausreichende Drucksteifigkeit, um in die Mischkammer 14 zu gelangen. Erhöht sich der Gegendruck 46 jedoch, so dass es letztlich zu einer Strömungsumkehr der Strömung 44 aus der Zusatzheizung 12 kommen könnte, so verschließt die Umschaltklappe 18 die Verbindung zwischen der Zusatzheizung 12 und der Mischkammer 14 beziehungsweise der Fahrzeugheizung 10 und gibt die Abluftöffnung 16 frei. Die Strömung 44 aus der Zusatzheizung 12 kann dann durch die Abluftöffnung 16 austreten. Somit kann die mitunter stark aufgeheizte Zusatzheizung 12 abkühlen.

Das Umschalten der Umschaltklappe 18 kann beispielsweise durch einen (nicht dargestellten) elektrischen Stellmotor erfolgen, der von einem Ausgangssignal eines (nicht dargestellten) Steuergerätes aktiviert wird. Dieses Steuergerät kann eine Vielzahl von Eingangssignalen verarbeiten, beispielsweise Druck beziehungsweise Temperatur an verschiedenen Positionen des Heizsystems. Wenn nach einer gewissen Zeit des Abströmens der Strömung 44 aus der Zusatzheizung 12 durch die Abluftöffnung 16 davon auszugehen ist, dass die Zusatzheizung 12 ausreichend abgekühlt ist, kann die Umschaltklappe 18 wieder in den ersten Zustand überführt werden, da dann mit einer gewissen Wahrscheinlichkeit die Drucksteifigkeit der Strömung 44 wieder ausreicht, so dass sie den Gegendruck 46 überwinden kann.

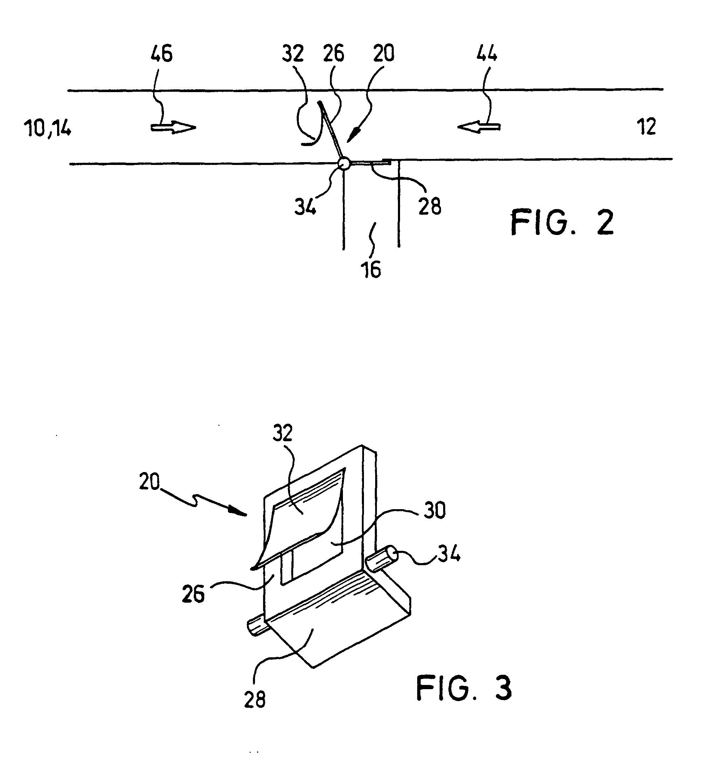

Figur 2 zeigt eine schematische Darstellung eines Teils eines Heizsystems mit einer zweiten Ausführungsform einer Umschaltklappe 20. Die strömungsmechanisch betätigte Umschaltklappe 20 ist im vorliegenden Beispiel in der Verbindungsleitung zwischen der Fahrzeugheizung 10 beziehungsweise der Mischkammer 14 und der Zusatzheizung 12 angeordnet. Sie befindet sich daher im Bereich der Strömung 44, die von der Zusatzheizung erzeugt wird, und des Gegendruckes 46, der von dem Gebläse der Fahrzeugheizung 10 erzeugt wird. Die Umschaltklappe 20 hat einen ersten Bereich 26, der in den Strömungsbereich hineinragt. Ein zweiter Bereich 28 dient dem Verschließen beziehungsweise dem Freigeben einer Abluftöffnung 16. Die Umschaltklappe 20 ist weiterhin mit einer Abdeckung 32 an ihrem ersten Bereich 26 ausgestattet, die vorliegend als Elastomerlappen realisiert ist. Die Umschaltklappe 20 ist mittels einer Achse 34 gelenkig gelagert.

Figur 3 zeigt eine perspektivische Darstellung der zweiten Ausführungsform einer Umschaltklappe 20. Eine mögliche Gestaltung der Umschaltklappe 20 ist zu erkennen. Dabei bilden der erste Bereich 26 und der zweite Bereich 28 im Querschnitt eine L-förmige Struktur, wobei der von dem ersten Bereich 26 und dem zweiten Bereich 28 eingeschlossene Winkel größer ist als 90°. Der erste Bereich 26 hat weiterhin eine Öffnung 30. Diese Öffnung kann von der Abdeckung 32 freigegeben beziehungsweise verschlossen werden. Aufgrund der Kräfte, die strömungsmechanisch auf die Umschaltklappe 20 wirken, kann die Umschaltklappe 20 durch gelenkige Lagerung um die Achse 34 geschwenkt werden.

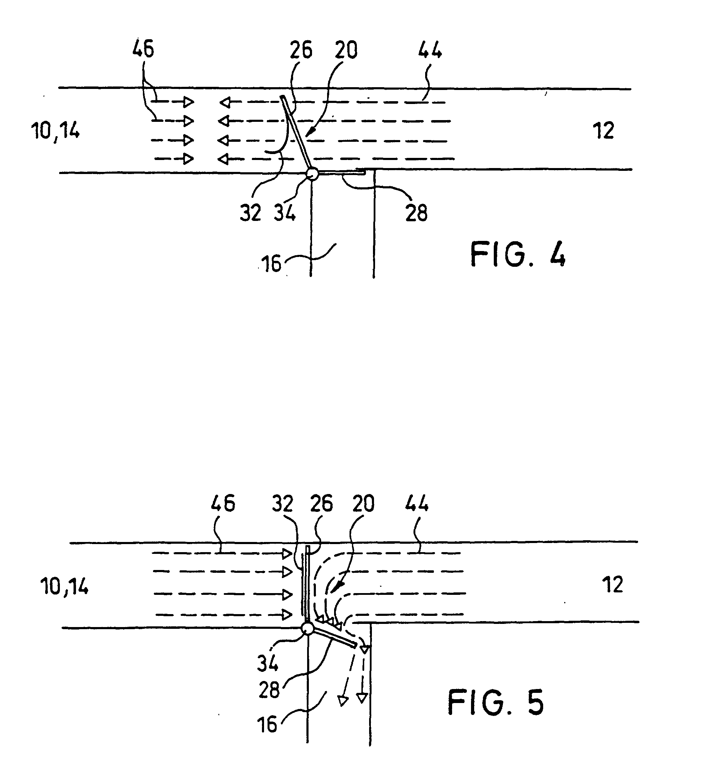

Figur 4 zeigt eine schematische Darstellung eines Teils eines Heizsystems mit einer zweiten Ausführungsform einer Umschaltklappe 20 während eines ersten Strömungszustandes. In dem hier dargestellten Strömungszustand ist der Gegendruck 46 der Fahrzeugheizung 10 gering. Somit kann die Zusatzheizung 12 eine Strömung 44 in die richtige Richtung ausbilden. Die Umschaltklappe 20 wird hierdurch in Richtung der Fahrzeugheizung 10 beziehungsweise der Mischkammer 14 gedrückt, und die als Rückschlagklappe wirkende Abdeckung 32 öffnet sich. Der zweite Bereich 28 der Umschaltklappe 20 verschließt die Abluftöffnung 16. Damit es nicht zu einem unbeabsichtigten Öffnen der Abluftöffnung 16 kommt, obwohl an sich ein korrekter Betrieb erfolgen kann, sind die an der Strömungsmechanik beteiligten Flächen, das heißt der erste Bereich 26, der zweite Bereich 28 und die Abdeckung 32 entsprechend aufeinander abgestimmt.

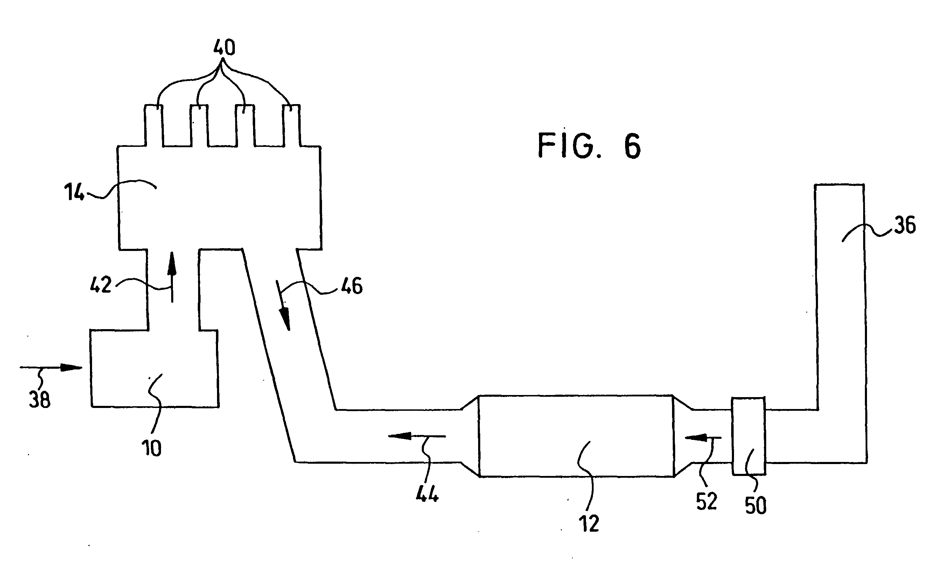

Figur 5 zeigt eine schematische Darstellung eines Teils eines Heizsystems mit einer zweiten Ausführungsform einer Umschaltklappe 20 während eines zweiten Strömungszustandes. Dieser Strömungszustand wird erreicht, wenn der Gegendruck 46, der aus der Richtung der Fahrzeugheizung 10 beziehungsweise der Mischkammer 14 kommt, ansteigt. Ist dies der Fall, so schließt sich die Abdekkung bzw. Rückschlagklappe 32 in zunehmendem Maße. Wird der Gegendruck 46 so stark, dass die Strömung 44 von der Zusatzheizung 12 nicht mehr in die richtige Richtung erfolgen kann, so wird die Rückschlagklappe 32 komplett geschlossen. Der sich aufbauende Staudruck zwingt die Umschaltklappe 20 zum Umkippen. Ebenfalls verschließt die als Rückschlagklappe wirkende Abdeckung 32 die Öffnung 30 (Figur 3) des ersten Bereiches 26 der Umschaltklappe 20. Verringert sich der Druck 46 der Fahrzeugheizung 10, so wird durch die Strömung 44 beziehungsweise durch den hierdurch entstehenden Überdruck an der Umschaltklappe 20 diese wieder zum Umkippen in die andere Richtung gezwungen.

Die Figuren 1, 2, 4 und 5 zeigen die Umschaltklappen 18, 20 stets im Verbindungsbereich zwischen der Mischkammer 14 und der Zusatzheizung 12. Dies ist eine bevorzugte Position der Umschaltklappen 18, 20. Es sind allerdings auch andere Positionierungen möglich, etwa direkt am Ausgang der Zusatzheizung 12 oder im Bereich von Mischkammer 14 beziehungsweise Fahrzeugheizung 10.

Figur 6 zeigt eine schematische Darstellung eines Heizsystems mit einem Zusatzgebläse. Das Heizsystem entspricht in weiten Teilen dem Heizsystem gemäß Figur 1 beziehungsweise dem Heizsystem des Standes der Technik gemäß den Figuren 12 und 13. Zusätzlich ist in Strömungsrichtung vor der Zusatzheizung 12 ein Zusatzgebläse 50 angeordnet, das eine zusätzliche Strömung 52 erzeugt. Auf diese Weise ist es möglich, den Volumenstrom beziehungsweise den Druck der Zusatzheizung 12 so weit zu erhöhen, dass die Zusatzheizung 12 unter beliebigen Betriebsbedingungen nicht überdrückt wird. Ferner ist keine Verdämmung erforderlich, um einen stabilen und schonenden Heizgerätebetrieb zu gewährleisten. Damit kann auch bei niedrigen Drehzahlen der Zusatzheizung 12 eine Überdrückung verhindert werden. In der Zusatzheizung 12 herrschen durchschnittlich geringere Temperaturen, so dass die Bauteile weniger belastet werden. Es kann ein gleichmäßigerer Betrieb der Zusatzheizung 12 stattfinden, der insbesondere weniger Regelzyklen erfordert, wodurch der Brenner in der Zusatzheizung 12 weniger belastet wird. Der Wärmeenergiebeitrag der Zusatzheizung 12 kann erhöht werden, da die Maximalheizleistung größer wird. Weiterhin kann ein sauberer Start- und Ausbrennzyklus gewährleistet werden. Da keine Verdämmung und damit in Verbindung keine Abluftöffnung vorgesehen sein muss, geht weniger Wärmeenergie verloren.

Bei dem Heizsystem gemäß Figur 6 ist es grundsätzlich möglich, das Zusatzgebläse 50 nur mit einer Einschalt- beziehungsweise Ausschaltfunktion zu versehen. Dies ermöglicht eine besonders einfache Ansteuerung, beispielsweise über ein Relais. Es ist aber auch möglich, das Zusatzgebläse 50 stufenlos zu regeln oder zu steuern. Dies kann direkt vom Heizungssteuergerät vorgenommen werden. Auch im Fall einer Einschalt-Ausschalt-Steuerung, das heißt ohne Drehzahländerung, kann das Heizungssteuergerät ein veranlassendes Signal generieren. Ebenfalls ist es möglich, dieses Signal über einen zusätzlichen Temperatursensor, beispielsweise ein Bimetallelement, unabhängig vom Heizungssteuergerät vorzunehmen.

Eingriffe in den Betrieb des Zusatzgebläses 50 können unter unterschiedlichen Voraussetzungen erfolgen. Das Zusatzgebläse kann beispielsweise immer eingeschaltet werden, wenn das Heizgerät einschaltet. In einem anderen Fall kann das Einschalten des Zusatzgebläses 50 vom Einschalten der Fahrzeugheizung 10 abhängig gemacht werden. Ebenfalls kann vorgesehen sein, dass nur im Falle einer Überdrückung oder Verdämmung das Zusatzgebläse 50 zugeschaltet wird.

In Figur 6 ist die Position des Zusatzgebläses 50 vor der Zusatzheizung 12 dargestellt. Diese Position ist zu bevorzugen, da auf diese Weise das Zusatzgebläse 50 keiner Wärmebelastung ausgesetzt wird. Ebenfalls ist es denkbar, das Zusatzgebläse 50 in den Bereich des Lufteintritts 36 zu verlegen. Wählt man ein Zusatzgebläse 50, welches einer gewissen Wärmebelastung standhält, so ist es auch möglich, das Zusatzgebläse 50 hinter der Zusatzheizung 12, das heißt zwischen Zusatzheizung 12 und Mischkammer 14, anzuordnen.

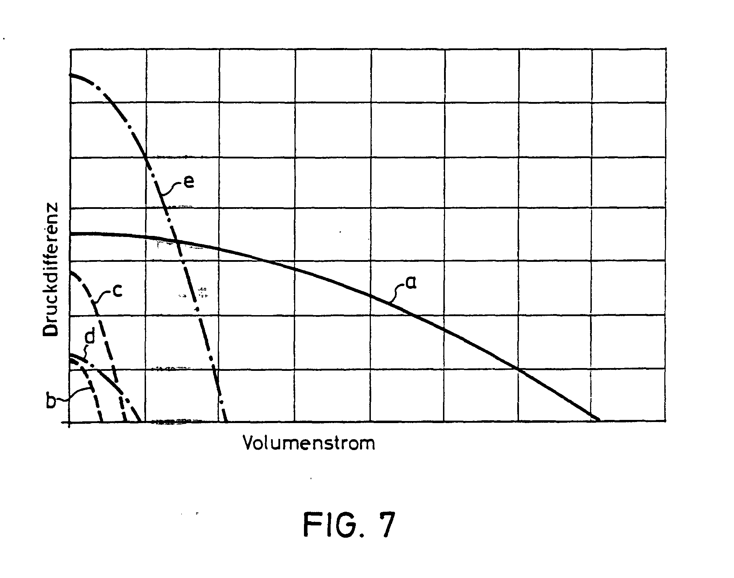

Figur 7 zeigt ein Diagramm, bei dem Druckdifferenzen von Drücken vor und hinter einer Luftzusatzheizung beziehungsweise einer Fahrzeugheizung gegen den Volumenstrom aufgetragen sind. Die dargestellten Gebläsekennlinien sind teilweise nur qualitativ zu betrachten. Kurve a zeigt die Kennlinie eines Gebläses einer Fahrzeugheizung auf hoher Stufe. Kurve b zeigt die Kennlinie eines vergleichsweise kleinen Gebläses einer Zusatzheizung bei relativ geringer Drehzahl; Kurve c zeigt die Kennlinie desselben Gebläses bei erhöhter Drehzahl. Kurve d zeigt die Kennlinie eines größeren Gebläses bei relativ geringer Drehzahl; Kurve e zeigt die Kennlinie desselben Gebläses bei erhöhter Drehzahl.

Die Kennlinien b, c, d von Zusatzheizungsgebläsen, die die Kennlinie a des Fahrzeugheizungsgebläses nicht schneiden, zeigen an, dass die Gebläse der Zusatzheizungen bei den jeweiligen Drehzahlen den Gegendruck der Fahrzeugheizung nicht überwinden können. Dies führt zu einer Überdrückung des Heizgerätes.

Die Kennlinie e des Zusatzheizungsgebläses schneidet die Kennlinie a des Fahrzeugheizungsgebläses. Dies bedeutet, dass bei der angegebenen Drehzahl das Zusatzheizungsgebläse einen höheren Druck aufbringen kann als das Fahrzeugheizungsgebläse und dabei weiterhin Heizluft in die richtige Richtung fördern kann. Es kommt also nicht zu einer Überdrückung des Heizsystems. Das kleinere Zusatzheizungsgebläse kann gemäß den Kennlinien b und c weder bei niedriger noch bei hoher Drehzahl dem Fahrzeugheizungsgebläse entgegenwirken. Es erfolgt unabhängig von der Drehzahl eine Überdrückung des Heizsystems. Bei dem größeren Gebläse findet eine solche Überdrückung nur bei der geringen Drehzahl gemäß Kennlinie d statt.

Allerdings ist zu beachten, dass die angegebenen Kennlinien Kaltkennlinien sind, so dass auch beim Einsatz eines großen Zusatzheizungsgebläses der Einsatz eines Zusatzgebläses sinnvoll ist. Dies hat den Grund, dass im Heizbetrieb der Aufbau der angegebenen hohen Drücke zwischen 6 und 7 Millibar nicht möglich ist, da mit steigendem Gegendruck auch der Volumenstrom abnimmt und somit die Heizlufttemperatur ansteigt. Bei maximalen Druck kann somit die Wärme des Wärmeübertragers nicht mehr abgeführt werden, es kommt zur Überhitzung und damit zur Überhitzungsabschaltung. Außerdem ist zu beachten, dass ein Abschalten oder ein Herunterregeln des Zusatzheizgerätes mitunter auch schon bei geringeren Gegendrücken erfolgt, was mit einer Absenkung der Drehzahl des Zusatzheizungsgebläses einhergeht. Auch dies birgt die Gefahr einer Überdrükkung des Heizsystems. Auch im Startbetrieb kann das Gebläse einer Zusatzheizung im Allgemeinen nicht mit Volllast betrieben werden, so dass im Hinblick darauf ebenfalls ein Zusatzgebläse nützlich ist, um eine Überdrückung des Heizsystems zu vermeiden.

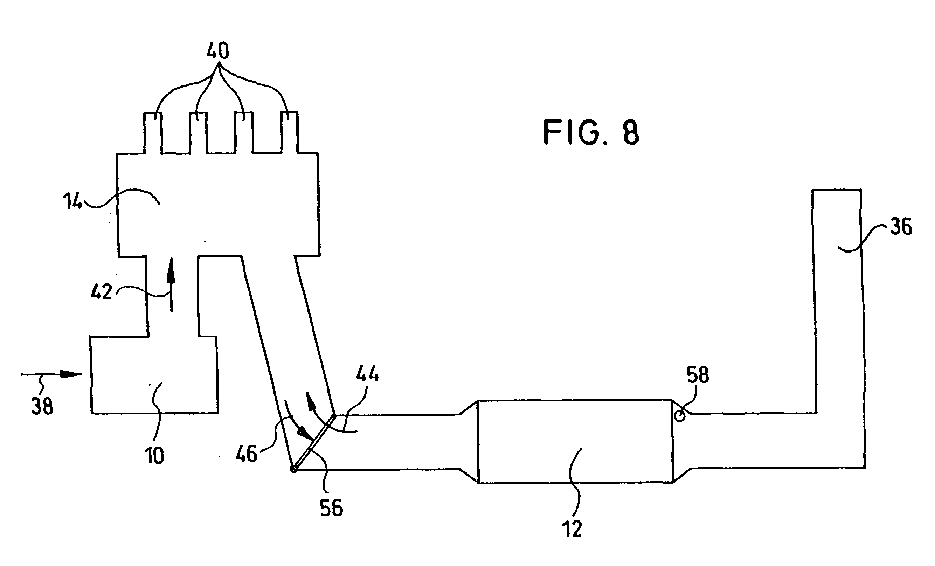

Figur 8 zeigt eine schematische Darstellung eines Heizsystems mit einer Rückschlagklappe. Das dargestellte Heizsystem entspricht in weiten Teilen dem Heizsystem des Standes der Technik gemäß den Figuren 12 und 13 beziehungsweise den Heizsystemen, die im Zusammenhang mit den Figuren 1 bis 6 erläutert wurden. In der dargestellten Ausführungsform sind jedoch kein Zusatzgebläse (50, Figur 6) und auch keine Abluftöffnung (16, Figur 1) sowie keine Umschaltklappe (18, Figur 1) vorgesehen. Als zusätzliche Komponenten sind eine Rückschlagklappe 56 zwischen der Zusatzheizung 12 und der Mischkammer 14 beziehungsweise der Fahrzeugheizung 10 sowie ein zusätzlicher Temperatursensor 58 am Eingangsbereich der Zusatzheizung 12 vorgesehen. Der zusätzliche Temperatursensor 58 kann direkt am Steuergerät der Luftzusatzheizung 12 angebracht werden. Vorzugsweise sollte der Sensor frei im Luftstrom liegen, um so eine möglichst geringe Trägheit zu realisieren. Die Anschlüsse und ein eventuell vorgesehener Stecker am Temperatursensor sollten jedoch wasserdicht ausgeführt sein.

Bei dem in Figur 8 dargestellten Heizsystem wird der Überdrückung des Heizsystems auf die folgende Weise entgegengewirkt. Die Rückschlagklappe 56 lässt eine Strömung 44 von der Zusatzheizung 12 in die Mischkammer 14 zu, wenn die Druckverhältnisse einen normalen Betrieb erlauben. Kommt es zu einer Überdrückung des Heizsystems durch erhöhten Gegendruck 46, so erfolgt durch die Rückschlagklappe 56 eine totale Verdämmung der Zusatzheizung 12. Ein in der Zusatzheizung 12 ohnehin in der Regel vorgesehener Temperatursensor (nicht dargestellt) erkennt diese totale Verdämmung aufgrund des erfolgenden Temperaturanstiegs und schaltet die Zusatzheizung 12 ab. Der zusätzliche Temperaturfühler 58 der Zusatzheizung 12 dient als redundantes Sicherheitselement. Ist nämlich die Rückschlagklappe 56 defekt und kommt es somit zu einer Überdrükkung des Heizsystems, so kann mitunter ein beispielsweise im Ausgangsbereich der Zusatzheizung 12 angeordneter Temperaturfühler keinen Temperaturanstieg feststellen. Im Bereich des Temperaturfühlers 58 am Eingangsbereich der Zusatzheizung 12 wird jedoch die rückströmende Luft durch die Zusatzheizung 12 ausreichend erhitzt sein, so dass der Temperaturanstieg als zuverlässiges Indiz für eine Überdrückung verwendet werden kann. Abhängig von den Zuständen sonstiger Fahrzeugkomponenten können im Steuergerät der Zusatzheizung 12 unterschiedliche Programmabläufe abgearbeitet werden. Wenn beispielsweise die Zündung des Fahrzeugs beziehungsweise die Fahrzeugheizung 10 eingeschaltet sind, so können bei einem Abschalten des Brenners die Drehzahlen der Zusatzheizung 12 so weit erhöht werden, dass in jedem Fall eine ausreichende Luftmenge zum Abkühlen der Bauteile in die vorgesehene Richtung zur Verfügung gestellt werden kann. Mit anderen Worten: eine Regelpausendrehzahl der Zusatzheizung 12 wird von einem an sich geringen Wert hochgesetzt, vorzugsweise auf 100 %. Sind hingegen die Zündung des Kraftfahrzeugs beziehungswelse die Fahrzeugheizung 10 ausgeschaltet, so wird auf die besonders starke Drehzahlerhöhung der Zusatzheizung 12 verzichtet, was mit einer geringeren Geräuschentwicklung verbunden ist. Mit anderen Worten: es findet eine "normale" Regelpause mit einer Regelpausendrehzahl von zirka 15 bis 30 % der Volllastdrehzahl statt. Das Überführen des Zusatzheizgerätes 12 in die Regelpause kann anstelle einer ebenfalls einsetzbaren Störverriegelung stattfinden. Dabei ist bevorzugt, dass das Heizgerät 12 nur eine begrenzte Anzahl aufeinanderfolgender Übergänge in eine Regelpause durchführen kann. Danach wird das Heizgerät in einen Zustand mit Störverriegelung überführt.

Bei dem System gemäß Figur 8 kann zusätzlich vorgesehen sein, das an der Ausblasseite der Luftzusatzheizung 12 eine Auskühlöffnung vorgesehen ist, die vorzugsweise mit einem sogenannten Entenschnabel verschlossen ist. Dies ermöglicht, dass bei einer totalen Verdämmung des Zusatzheizgerätes 12 und dem daraus resultierenden hohen Druck im System zumindest ein kleiner Lufttransport stattfinden kann und die erhitzte Luft von den empfindlichen Bauteilen abgehalten wird. Bringt man gleichzeitig die Öffnung als Bohrung an der richtigen Stelle an, so kann sie als Ablauf für Kondenswasser verwendet werden.

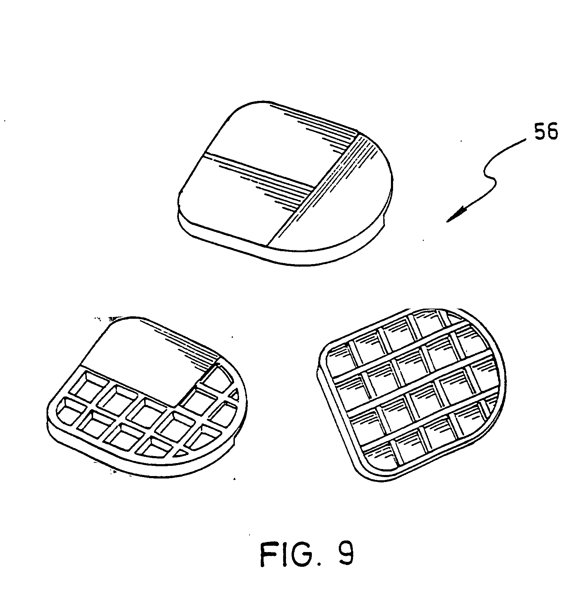

Figur 9 zeigt drei perspektivische Darstellungen einer Rückschlagklappe in verschiedenen Perspektiven beziehungsweise Montagezuständen. Es sind drei Beispiele von Rückschlagklappen 56 gezeigt, wobei diesen gemeinsam ist, dass ein gitterförmiger Träger mit einem oder mehreren darauf angeordneten elastischen Lappen vorgesehen ist. Die Lappen können den gitterförmigen Träger vollständig überdecken.

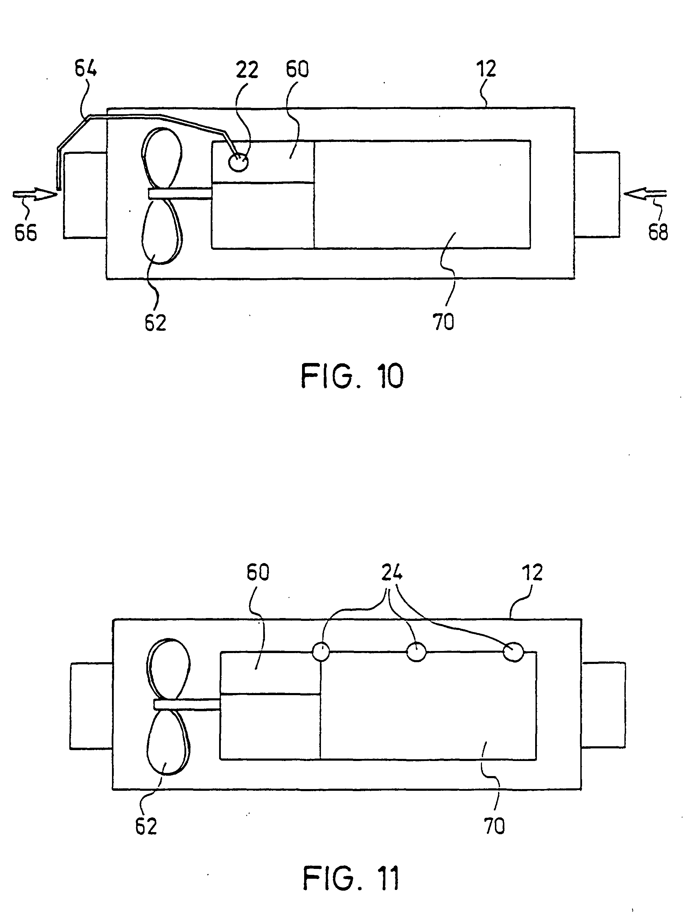

Figur 10 zeigt eine schematische Darstellung einer Luftzusatzheizung 12 mit einem Druckdifferenzsensor 22. Es sind weiterhin ein Steuergerät 60, ein Gebläse 62 und ein Wärmeübertrager 70 dargestellt. Auf dem Steuergerät 60 ist ein Druckdifferenzsensor 22 angebracht, der über eine Druckleitung 64 mit dem Bereich vor der Luftzusatzheizung 12, das heißt dem Zuströmbereich, verbunden ist. Der Druckdifferenzsensor 22 ist somit in der Lage, eine Differenz eines Drucks 66 vor und eines Drucks 68 hinter der Luftzusatzheizung 12 zu messen. Dieses Signal kann dann direkt dem Steuergerät 60 eingegeben werden. Wird eine zu große Druckdifferenz festgestellt, so wird je nach Ausführungsform des restlichen Heizsystems auf eine Überdrückung beziehungsweise eine Verdämmung geschlossen. Die Zusatzheizung 12 wird dann ausgeschaltet beziehungsweise in einen anderen Betriebsmodus überführt.

Weitere Möglichkeiten zum Erkennen einer Überdrückung bestehen darin, einen Windrichtungssensor beziehungsweise einen Strömungssensor zu verwenden. Dieser ist in der Lage, eine Strömungsrichtung zu erkennen, wobei Verfahren verwendet werden können, die auf einem Flügelrad, einer kaloriemetrischen Bestimmung über einen Heizdraht oder auf Ultraschall beruhen. Weiterhin kann die Drehzahländerung eines Gebläses als Indiz für eine Überdrückung herangezogen werden, da die Drehzahl ansteigt, sobald das Heizgerät verdämmt beziehungsweise überdrückt wird. Dieser Anstieg der Gebläsedrehzahl kann über das Heizungssteuergerät 60 erkannt und ausgewertet werden.

Figur 11 zeigt eine schematische Darstellung einer Luftzusatzheizung 12 mit mehreren Temperatursensoren 24, wobei ansonsten ein ähnlicher Aufbau wie in Figur 10 erkannt werden kann. Diese Temperatursensoren 24 sind an unterschiedlichen Positionen der Luftzusatzheizung 12 angeordnet. Die Informationen der unterschiedlichen Temperaturfühler 24 können in unterschiedlicher Weise genutzt werden. Es gibt beispielsweise Betriebsbedingungen, bei denen im Falle einer Überdrückung die Temperaturen des Temperatursensors 24 im Bereich des Steuergerätes 60 und des mittleren Temperatursensors 24 ansteigen, während die Temperatur des Temperatursensors 24 im Bereich des Eingangs der Zusatzheizung 12 abfällt. Dieser Zustand kann beispielsweise als Indiz für eine Überdrückung herangezogen werden. Ebenfalls kann die zeitliche Änderung der Temperatur an den Temperaturfühlern im Rahmen einer Gradientenauswertung genutzt werden. Dabei kann eine positive Gradientenauswertung in Frage kommen, nämlich im Hinblick auf solche Temperatursensoren 24, bei denen im Falle einer Überdrückung eine Temperaturerhöhung zu erwarten ist. Bei anderen Temperatursensoren 24, bei denen eine Erniedrigung der Temperatur im Falle einer Überdrückung zu erwarten ist, kann eine negative Gradientenauswertung verwendet werden. Es ist zu berücksichtigen, dass bei besonderen Betriebszuständen des Heizgerätes, beispielsweise am Anfang des Betriebs im ausgekühlten Zustand, gewisse Nebenbedingungen vorliegen. Beispielsweise kann beim Betriebsbeginn einem durchgekühlten Heizgerät schlagartig warme Luft aus dem Innenraum zugeführt werden, wodurch ein hoher Temperaturgradient ermittelt wird. Es wäre fehlerhaft, diesen als Indiz für eine Überdrückung zu verwenden. Ebenfalls sollten erste Anzeichen einer Temperaturerhöhung am Überdrückungssensor nicht unmittelbar in Maßnahmen gegen eine Überdrückung umgesetzt werden. Vielmehr sollten wiederholte Messungen der Messwerte herangezogen werden beziehungsweise unterschiedliche Messwerte, die an sich redundant sind, und als Kriterium für eine Gegenmaßnahme gegen eine Überdrückung verwendet werden.

Je nach dem eingesetzten System zur Vermeidung einer Überdrückung können äußere Einflussfaktoren eine große Rolle spielen. Insbesondere bei einer Temperaturauswertung kann es sinnvoll sein, die Außentemperatur, die Ansaugtemperatur, den Einschaltzustand der Fahrzeugheizung, den Verdämmungsgrad der Ansaugheizung und/oder den Vorzustand der Fahrzeugheizung bei der Erwägung von Maßnahmen einzubeziehen. Aus beliebigen Kombinationen dieser Einflussfaktoren resultieren dann unterschiedliche Betriebsarten des Systems.

### Bezugszeichenliste

- 10: Fahrzeugheizung
- 12: Zusatzheizung
- 14: Mischkammer
- 16: Abluftöffnung
- 18: Umschaltklappe
- 20: Umschaltklappe
- 22: Druckdifferenzsensor
- 24: Temperatursensor
- 26: erster Bereich der Umschaltklappe
- 28: zweiter Bereich der Umschaltklappe
- 30: Öffnung
- 32: Abdeckung
- 34: Achse
- 36: Lufteintritt
- 38: Lufteintritt
- 40: Luftkanäle
- 42: Strömung
- 44: Strömung
- 46: Gegendruck
- 50: Zusatzgebläse
- 52: Strömung
- 56: Rückschlagklappe
- 58: Temperaturfühler
- 60: Steuergerät
- 62: Gebläse
- 64: Druckleitung
- 66: Druck vor der Luftzusatzheizung
- 68: Druck hinter der Luftzusatzheizung
- 70: Wärmeübertrager
- 110: Fahrzeugheizung
- 112: Zusatzheizung
- 114: Mischkammer
- 136: Lufteintritt
- 138: Lufteintritt
- 140: Luftkanäle
- 142: Strömung
- 144: Strömung
- 146: Gegendruck

## Patentansprüche

1. Heizsystem zum Erwärmen von Luft, insbesondere zum Beheizen des Innenraums eines Kraftfahrzeugs, mit mindestens einer ersten Heizung (10), mindestens einer zweiten Heizung (12), mindestens einem Steuergerät (60) und mindestens einem Strömungsweg zwischen der ersten Heizung (10) und der zweiten Heizung (12),
**dadurch gekennzeichnet,**
**dass** eine Rückschlagklappe (56) vorgesehen ist, die eine Strömung von der ersten Heizung (10) zu der zweiten Heizung (12) behindert,
**dass** Mittel (24) zum Erkennen der Behinderung der Strömung von der ersten Heizung (10) zu der zweiten Heizung (12) vorgesehen sind und
**dass** ein Betriebszustand der zweiten Heizung (12) in Abhängigkeit von Ausgangssignalen der Mittel (24) zum Erkennen der Behinderung durch das Steuergerät (60) steuerbar beziehungsweise regelbar ist.

2. Heizsystem nach Anspruch 1,
**dadurch gekennzeichnet, dass** die erste Heizung eine Fahrzeugheizung (10) ist und dass die zweite Heizung eine Zusatzheizung (12) ist.

3. Heizsystem nach Anspruch 1 oder 2,
**dadurch gekennzeichnet, dass** mindestens eine Mischkammer (14) vorgesehen ist, in die aus der mindestens einen ersten Heizung (10) und aus der mindestens einen zweiten Heizung (12) ausgeströmte Luft eintreten kann.

4. Heizsystem nach einem der vorhergehenden Ansprüche,
**dadurch gekennzeichnet, dass** zum Erfassen von Druckzuständen in dem Heizsystem mindestens ein Drucksensor (22) zum Erzeugen eines Eingangssignals für ein Steuergerät (60) vorgesehen ist.

5. Heizsystem nach einem der vorhergehenden Ansprüche,
**dadurch gekennzeichnet, dass** zum Erfassen von Temperaturzuständen in dem Heizsystem mindestens ein Temperatursensor (24) zum Erzeugen eines Eingangssignals für ein Steuergerät (60) vorgesehen ist.

6. Heizsystem nach einem der vorhergehenden Ansprüche,
**dadurch gekennzeichnet, dass** die Mittel (24) zum Erkennen der Behinderung als erster Temperatursensor (24) realisiert sind und dass ein zweiter Temperatursensor (58) zum Erkennen einer Strömungsumkehr in der zweiten Heizung (12) vorgesehen ist.

7. Heizsystem nach einem der vorhergehenden Ansprüche,
**dadurch gekennzeichnet, dass** an einer Ausblasseite der zweiten Heizung (12) eine Auskühlöffnung vorgesehen ist.

8. Heizsystem nach einem der vorhergehenden Ansprüche,
**dadurch gekennzeichnet, dass** die Rückschlagklappe (56) einen gitterförmigen Träger aufweist und dass die Rückschlagklappe (56) eine elastische Abdeckung aufweist, die den gitterförmigen Träger zumindest teilweise überdecken kann.

9. Heizsystem nach einem der vorhergehenden Ansprüche,
**dadurch gekennzeichnet, dass** ein Zusatzgebläse (50) vorgesehen ist, mit dem eine Strömung von der zweiten Heizung (12) zu der ersten Heizung (10) erzeugbar ist.

10. Verfahren zum Beeinflussen von Luftströmungen in einem Heizsystem zum Erwärmen von Luft, insbesondere zum Beheizen des Innenraums eines Kraftfahrzeugs, mit mindestens einer ersten Heizung (10), mindestens einer zweiten Heizung (12), mindestens einem Steuergerät (60) und mindestens einem Strömungsweg zwischen der ersten Heizung (10) und der zweiten Heizung (12),
**dadurch gekennzeichnet,**
**dass** eine Strömung von der ersten Heizung (10) zu der zweiten Heizung (12) durch eine Rückschlagklappe (56) behindert wird,
**dass** die Behinderung der Strömung von der ersten Heizung (10) zu der zweiten Heizung (12) erkannt wird und
**dass** ein Betriebszustand der zweiten Heizung (12) in Abhängigkeit des Erkennens der Behinderung durch das Steuergerät (60) gesteuert beziehungsweise geregelt wird.

11. Verfahren nach Anspruch 10,
**dadurch gekennzeichnet, dass** die erste Heizung eine Fahrzeugheizung (10) ist und dass die zweite Heizung eine Zusatzheizung (12) ist.

12. Verfahren nach Anspruch 10 oder 11,
**dadurch gekennzeichnet, dass** eine Mischkammer (14) vorgesehen ist, in die aus der mindestens einen ersten Heizung (10) und aus der mindestens einen zweiten Heizung (12) ausgeströmte Luft eintreten kann.

13. Verfahren nach einem der Ansprüche 10 bis 12,
**dadurch gekennzeichnet, dass** Druckzustände in dem Heizsystem von mindestens einem Drucksensor (22) erfasst werden und dass ein druckabhängiges Eingangssignal für ein Steuergerät (60) erzeugt wird.

14. Verfahren nach einem der Ansprüche 10 bis 13,
**dadurch gekennzeichnet, dass** Temperaturzustände in dem Heizsystem von mindestens einem Temperatursensor erfasst werden und dass ein temperaturabhängiges Eingangssignal für ein Steuergerät (60) erzeugt wird.

15. Verfahren nach einem der Ansprüche 10 bis 14,
**dadurch gekennzeichnet, dass** die Behinderung der Strömung von der ersten Heizung (10) zu der zweiten Heizung (12) von einem ersten Temperatursensor (24) erfasst wird und dass eine Strömungsumkehr in der zweiten Heizung (12) von einem zweiten Temperatursensor (58) erfasst wird.

16. Verfahren nach einem der Ansprüche 10 bis 15,
**dadurch gekennzeichnet, dass** nach dem Erkennen einer Behinderung einer Strömung von der ersten Heizung (10) zu der zweiten Heizung (12) die Heizwirkung der zweiten Heizung (12) abgeschaltet wird.

17. Verfahren nach einem der Ansprüche 10 bis 16,
**dadurch gekennzeichnet, dass** nach dem Erkennen einer Strömungsumkehr in der zweiten Heizung (12) die Heizwirkung der zweiten Heizung (12) abgeschaltet wird.

18. Verfahren nach Anspruch 16 oder 17,
**dadurch gekennzeichnet, dass** nach dem Abschalten der Heizwirkung ein Gebläse mit erhöhter Drehzahl Luft durch die zweite Heizung (12) fördert.

19. Verfahren nach einem der Ansprüche 16 bis 18,
**dadurch gekennzeichnet, dass** nach dem Abschalten der Heizwirkung ein Gebläse mit vorbestimmter Drehzahl Luft durch die zweite Heizung (12) fördert, wobei die vorbestimmte Drehzahl durch das Steuergerät (60) bestimmt wird.

## Claims

1. Heating system for warming air, specifically for heating the interior of a motor vehicle, with at least one primary heating system (10), at least one secondary heating system (12), at least one control unit (60) and at least one flow path between the primary heating system (10) and the secondary heating system (12),
**characterised in that**
a non-return valve (56) is provided, which prevents a flow from the primary heating system (10) to the secondary heating system (12),
that means (24) to detect the prevention of the flow from the primary heating system (10) to the secondary heating system (12) are provided and that one operating state of the secondary heating system (12), depending on the output signals from the means (24) for detecting the prevention, can be varied or controlled by means of the control unit (60).

2. Heating system as in Claim 1,
**characterised in that** the primary heating system is a motor vehicle heating system (10) and that the secondary heating system is an additional heating system (12).

3. Heating system as in either of Claims 1 or 2,
**characterised in that** at least one mixing chamber (14) is provided, into which air expelled from the at least one primary heating system (10) and from the at least one secondary heating system (12) can enter.

4. Heating system as in any of the preceding claims
**characterised in that** at least one pressure sensor (22), for producing an input signal for a control unit (60), is provided for recording pressure states in the heating system.

5. Heating system as in any of the preceding claims
**characterised in that** at least one temperature sensor (24), for producing an input signal for a control unit (60), is provided for recording temperature states in the heating system.

6. Heating system as in any of the preceding claims
**characterised in that** the means (24) for detecting the prevention take the form of a primary temperature sensor (24) and that a second temperature sensor (58) is provided for detecting a flow reversal in the secondary heating system (12).

7. Heating system as in any of the preceding claims
**characterised in that** a cooling vent is provided on a blower panel in the secondary heating system (12).

8. Heating system as in any of the preceding claims
**characterised in that** the non-return valve (56) has a support in the form of a grid and that the non-return valve (56) has an elastic covering which can cover at least in part the support in the form of a grid.

9. Heating system as in any of the preceding claims
**characterised in that** a supplementary blower (50) is provided, with which a flow from the secondary heating system (12) to the primary heating system (10) can be generated.

10. Process for influencing air flows in a heating system for warming air, specifically for heating the interior of a motor vehicle, with which at least one primary heating system (10), at least one secondary heating system (12), at least one control unit (60) and at least one flow path between the primary heating system (10) and the secondary heating system (12),
**characterised in that**,
a flow from the primary heating system (10) to the secondary heating system (12) is prevented by means of a non-return valve (56),
that the prevention of the flow from the primary heating system (10) to the secondary heating system (12) is detected and
that an operating state of the secondary heating system (12 is varied or controlled, depending on detection of the prevention by the control unit (60).

11. Process as in Claim 10,
**characterised in that** the primary heating system is a motor vehicle heating system (10) and that the secondary heating system is an additional system (12).

12. Process as in either of Claims 10 or 11,
**characterised in that** a mixing chamber (14) is provided, into which expelled air from the at least one primary heating system (10) and from the at least one secondary heating system (12) can enter.

13. Process as in any one of Claims 10 to 12,
**characterised in that** pressure states in the heating system are recorded by at least one pressure sensor (22) and that a pressure-dependent input signal is generated for a control unit (60).

14. Process as in any one of Claims 10 to 13,
**characterised in that** temperature states in the heating system are recorded by at least one temperature sensor and that a temperature-dependent input signal is generated for a control unit (60).

15. Process as in any one of Claims 10 to 14,
**characterised in that** the prevention of the flow from the primary heating system (10) to the second heating system (12) is recorded by a primary temperature sensor (24) and that a flow reversal in the secondary heating system (12) is recorded by a secondary temperature sensor (58).

16. Process as in any one of Claims 10 to 15,
**characterised in that**, after detecting a prevention of a flow from the first heating system (10) to the secondary heating system (12), the heating effect of the secondary heating system (12) is disconnected.

17. Process as in any one of Claims 10 to 16,
**characterised in that**, after detecting a flow reversal in the secondary heating system (12), the heating effect of the secondary heating system (12) is disconnected.

18. Process as in either of Claims 16 or 17,
**characterised in that**, after the heating effect has been disconnected, a blower running at high speed forces air through the secondary heating system (12).

19. Process as in any one of Claims 16 to 18,
**characterised in that**, after disconnecting the heating effect, a blower running at a preset speed forces air through the secondary heating system (12), with the preset speed being determined by the control unit (60).

## Revendications

1. Système de chauffage destiné à réchauffer de l'air, notamment à chauffer l'habitacle d'un véhicule automobile, comportant au moins un premier chauffage (10), au moins un deuxième chauffage (12), au moins un appareil de commande (60) et au moins un chemin d'écoulement entre le premier chauffage (10) et le deuxième chauffage (12),
**caractérisé en ce qu'**il est prévu un clapet de non-retour (56) qui empêche un écoulement depuis le premier chauffage (10) vers le deuxième chauffage (12),
**en ce qu'**il est prévu des moyens (24) pour détecter l'empêchement de l'écoulement depuis le premier chauffage (10) vers le deuxième chauffage (12),
et **en ce qu'**un état de fonctionnement du deuxième chauffage (12) peut être commandé ou encore régulé par l'appareil de commande (60) en fonction de signaux de sortie des moyens (24) pour détecter l'empêchement de l'écoulement.

2. Système de chauffage selon la revendication 1, **caractérisé en ce que** le premier chauffage est un chauffage de véhicule (10), et **en ce que** le deuxième chauffage est un chauffage auxiliaire (12).

3. Système de chauffage selon la revendication 1 ou 2, **caractérisé en ce qu'**il est prévu au moins une chambre mélangeuse (14), dans laquelle peut pénétrer de l'air sortant du premier chauffage (10) au moins unique et du deuxième chauffage (12) au moins unique.

4. Système de chauffage selon l'une des revendications précédentes, **caractérisé en ce que**, afin de détecter des états de pression dans le système de chauffage, il est prévu au moins un capteur de pression (22) destiné à produire un signal d'entrée pour un appareil de commande (60).

5. Système de chauffage selon l'une des revendications précédentes, **caractérisé en ce que**, afin de détecter des états de température dans le système de chauffage, il est prévu au moins un capteur de température (24) destiné à produire un signal d'entrée pour un appareil de commande (60).

6. Système de chauffage selon l'une des revendications précédentes, **caractérisé en ce que** les moyens (24) pour détecter l'empêchement de l'écoulement sont réalisés sous la forme d'un premier capteur de température (24), et **en ce qu'**il est prévu un deuxième capteur de température (58) pour détecter une inversion d'écoulement dans le deuxième chauffage (12).

7. Système de chauffage selon l'une des revendications précédentes, **caractérisé en ce qu'**une ouverture de refroidissement est prévue sur un côté d'évacuation du deuxième chauffage (12).

8. Système de chauffage selon l'une des revendications précédentes, **caractérisé en ce que** le clapet de non-retour (56) présente un support en forme de grille, et **en ce que** le clapet de non-retour (56) présente un recouvrement élastique qui peut recouvrir au moins partiellement le support en forme de grille.

9. Système de chauffage selon l'une des revendications précédentes, **caractérisé en ce qu'**il est prévu une soufflante auxiliaire (50) qui permet de produire un écoulement depuis le deuxième chauffage (12) vers le premier chauffage (10).

10. Procédé pour influencer les écoulements d'air dans un système de chauffage destiné à réchauffer de l'air, notamment à chauffer l'habitacle d'un véhicule automobile, comportant au moins un premier chauffage (10), au moins un deuxième chauffage (12), au moins un appareil de commande (60) et au moins un chemin d'écoulement entre le premier chauffage (10) et le deuxième chauffage (12),
**caractérisé en ce qu'**un écoulement depuis le premier chauffage (10) vers le deuxième chauffage (12) est empêché par un clapet de non-retour (56),
**en ce qu'**on détecte l'empêchement de l'écoulement depuis le premier chauffage (10) vers le deuxième chauffage (12),
et **en ce qu'**un état de fonctionnement du deuxième chauffage (12) est commandé ou encore régulé par l'appareil de commande (60) en fonction de la détection de l'empêchement de l'écoulement.

11. Procédé selon la revendication 11, **caractérisé en ce que** le premier chauffage est un chauffage de véhicule (10), et **en ce que** le deuxième chauffage est un chauffage auxiliaire (12).

12. Procédé selon la revendication 10 ou 11, **caractérisé en ce qu'**il est prévu une chambre mélangeuse (14), dans laquelle peut pénétrer de l'air sortant du premier chauffage (10) au moins unique et du deuxième chauffage (12) au moins unique.

13. Procédé selon l'une des revendications 10 à 12, **caractérisé en ce que** des états de pression dans le système de chauffage sont détectés par au moins un capteur de pression (22), et **en ce qu'**un signal d'entrée fonction de la pression est produit pour un appareil de commande (60).

14. Procédé selon l'une des revendications 10 à 13, **caractérisé en ce que** des états de température dans le système de chauffage sont détectés par au moins un capteur de température, et **en ce qu'**un signal d'entrée fonction de la température est produit pour un appareil de commande (60).

15. Procédé selon l'une des revendications 10 à 14, **caractérisé en ce que** l'empêchement de l'écoulement depuis le premier chauffage (10) vers le deuxième chauffage (12) est détecté par un premier capteur de température (24), et **en ce qu'**une inversion d'écoulement dans le deuxième chauffage (12) est détectée par un deuxième capteur de température (58).

16. Procédé selon l'une des revendications 10 à 15, **caractérisé en ce que** la fonction de chauffage du deuxième chauffage (12) est désactivée à la suite de la détection d'un empêchement d'un écoulement depuis le premier chauffage (10) vers le deuxième chauffage (12).

17. Procédé selon l'une des revendications 10 à 16, **caractérisé en ce que** la fonction de chauffage du deuxième chauffage (12) est désactivée à la suite de la détection d'une inversion d'écoulement dans le deuxième chauffage (12).

18. Procédé selon la revendication 16 ou 17, **caractérisé en ce que**, à la suite de la désactivation de la fonction de chauffage, une soufflante à vitesse de rotation accrue refoule l'air à travers le deuxième chauffage (12).

19. Procédé selon l'une des revendications 16 à 18, **caractérisé en ce que**, à la suite de la désactivation de la fonction de chauffage, une soufflante à vitesse de rotation prédéfinie refoule l'air à travers le deuxième chauffage (12), la vitesse de rotation prédéfinie étant définie par l'appareil de commande (60).
